# EUROPÄISCHE PATENTANMELDUNG

(11) **EP 0 570 628 A1**
(43) Veröffentlichungstag der Anmeldung: **24.11.1993**
(21) Anmeldenummer: 92121874.9
(22) Anmeldetag: 23.12.1992
(51) Int. Cl.: D03C 1/00, F16D 11/06

(54) **Schaftmaschine mit Exzentereinheiten für die Schaftbewegung**

(30) Priorität: 21.05.1992 CH 1638/92
(71) Anmelder: Stäubli AG (Stäubli SA) (Stäubli Ltd.), CH-8810 Horgen-Zürich (CH)
(72) Erfinder: Metzler, Paul, CH-8804 Au (CH)
(74) Vertreter: Hunziker, Jean

(57) **Zusammenfassung**

Jede Exzentereinheit besteht aus einer auf einer Antriebsachse (6) der Schaftmaschine drehbar gelagerten Exzenterscheibe (7), auf deren Umfang ein Pleuel (8) gelagert ist. Dieser treibt eine mit dem zugeordneten Schaft bewegungsverbundene Schwinge (9). Ein vom aussen durch ein Steuerorgan (10) gesteuertes Kupplungsglied kuppelt mustergemäss die Exzentereinheit synchron mit dem Antrieb ein- und aus. Das Kupplungsglied ist durch eine um einen Bolzen (14) schwenkbar gelagerte Doppelklinke (2) mit Kupplungsnocken (24) gebildet, welche durch eine Feder (5) in der einen, eingekuppelten Lage gehalten ist. Je nach Mustersteuerung kann, während dem Stillstand der Schaftmaschine, die Doppelklinke (2) durch ein unmittelbar direkt kraft- oder formschlüssig auf sie einwirkendes Stellglied (17) des Steuerorgans (10) entgegen der Wirkung der Feder (5) ausgekuppelt werden. Die Doppelklinke (2) ist in ihrer kuppelnden Schwenklage durch ihre Feder (5) rastend in einer Längsnut (15) der Antriebswelle (1) gehalten. In ihrer ausgekuppelten Schwenklage ist sie in eine Haltenut (16) schaltbar, sodass die ausgekuppelte Doppelklinke (2) die antreibenden Teile und somit die Schäfte in der Offenfachstellung arretiert.

## Beschreibung

Die vorliegende Erfindung bezieht sich auf eine Rotations-Schaftmaschine mit Exzentereinheiten für die Schaftbewegung, wobei jede Exzentereinheit aus einer auf einer Antriebswelle drehbar gelagerten Exzenterscheibe besteht, auf deren Umfang ein Pleuel gelagert ist, welcher eine mit dem zugeordneten Schaft bewegungsverbundene Schwinge antreibt, und mit einem von aussen durch ein Steuerorgan gesteuerten Kupplungsglied, welches mustergemäss die Exzentereinheit mit dem Antrieb ein- und auskuppelt.

Eine Keilkupplungssteuerung dieser Art, bei welcher die Exzentereinheiten von einer diskontinuierlich rotierenden Antriebswelle je über ein von aussen radial gesteuertes Kupplungsglied und eine Synchronübersetzung 1:2 angetrieben werden, ist in der DE-OS 28 41 281 beschrieben. Bei dieser bekannten Ausführung ist die ganze mechanische Steuerung durch die Schaftteilung begrenzt und es müssen zum Aufbringen der erforderlichen Schaltkraft für die Steuerung über Nadel und Steuerhebel zwischen der Mustereinlesung und dem Kupplungsglied Kraftverstärker, in der beschriebenen Ausführung in Form eines Steuermechanismus, welcher Steuerhebel synchron mit der Schaftmaschine antreibt, geschaltet werden.

Diese Konstruktion benötigt somit viele Teile und ist dadurch kostspielig und hat einen hohen Platzbedarf. Die Notwendigkeit zusätzlicher Teile führt zwangsläufig auch zu einer Zunahme des Energieverbrauchs und der Massen, welche dauernd bewegt werden müssen. Daraus ergibt sich wiederum ein hoher Lärm beim Betrieb, ein hoher Verschleiss, höhere Herstellungs- und Betriebskosten und eine reduzierte Zuverlässigkeit. Bedingt durch ihre Konstruktion kann die Steuerung auch nicht platzsparend, z.B. versetzt angeordnet werden, sondern muss innerhalb der Schaftteilung untergebracht werden.

Diese Nachteile werden auch durch die aus der EP-OS 0 234 321 bekanntgewordene Steuerung für eine Rotations-Schaftmaschine nicht behoben. Bei dieser bekannten Steuerung, bei der die Bewegung des Kupplungsgliedes von innen nach aussen erfolgt, sind pro Rotationseinheit jeweils zwei Elemente in Form von elektromagnetisch betätigten Steuerelementen für jeden Schaft erforderlich und das Kuppplungsglied bewegt sich praktisch kontinuierlich bei jedem Schusseintrag, nämlich zweimal pro Schaftmaschinenumdrehung.

Mit der vorliegenden Erfindung soll nun die Aufgabe gelöst werden, bei einer Schaftmaschine der eingangs genannten Art die Steuerung der Kupplung konstruktiv erheblich zu vereinfachen, zuverlässiger und auch kostengünstiger zu gestalten, den Energieverbrauch und den Platzbedarf zu verringern und einen wesentlich leiseren Betrieb und nicht zuletzt auch eine gewebeschonende Rückwärtsbewegung der Schäfte beim Beheben von Schuss- und Kettfadenbrüchen, mit den erforderlichen Schaftnivellierungen im Hochfach, Mittelfach und Tieffach aus jeder Schaftposition zu ermöglichen.

Diese Aufgabe wird erfindungsgemäss durch die im Kennzeichen des Anspruchs 1 angegebenen Merkmale gelöst.

Die erfindungsgemässe Ausbildung benötigt keine mechanischen Hilfsbewegungen. Das Stellglied des Steuerorgans wirkt unmittelbar direkt auf das Kupplungsglied. Es sind keine Ausweichbewegungen notwendig und es ergeben sich auch keine Synchronisationsprobleme bei einem Programmwechsel. Dank der direkten Ansteuerung sind nur eine minimale Anzahl von Drehpunkten erforderlich und es entstehen auch keine unnötigen Bewegungen, insbesondere keine vom Programm nicht geforderte kontinuierliche Bewegungen. Durch den Wegfall zusätzlicher Elemente für eine Kraftverstärkung ergeben sich nicht nur weniger Teile und dadurch weniger Verschleiss und Lärm sowie grössere Zuverlässigkeit, sondern die Wandlung und Uebertragung des programmabhängigen Steuerimpulses erfolgt zeitlich ohne Verzögerung während dem Fachstillstand, weil vorher keine zeitlich gestaffelten mechanischen Hilfsbewegungen wie bei den bekannten Steuerungen notwendig sind. Ausserdem steht, insbesondere in tangentialer Richtung, mehr Raum zur Verfügung, was eine versetzte Anordnung erlaubt und dadurch eine verbesserte Raumverteilung für die Stellglieder ermöglicht. Die erfindungsgemässe Anordnung ist ausserdem, ein bedeutender Vorteil, aus jeder Stellung hinaus ohne zusätzliche Elemente auch programmgesteuert ohne gewebebelastende Zusatzbewegungen rücklauffähig.

Bei einer vorteilhaften Ausführungsform, bei der jede Exzentereinheit von einer diskontinuierlich rotierenden Antriebswelle über ein der Exzentereinheit vorgelagertes und durch das Kupplungsglied mit dieser kuppelbares, frei drehbar auf der Antriebswelle gelagertes Zahnrad über eine Synchronübersetzung 1:2 angetrieben ist, wird die Doppelklinke in ihrer kuppelnden Schwenklage durch ihre Feder rastend in einer Längsnut der Antriebswelle gehalten oder ist vom direkt auf ihren einen Klinkenarm wirkenden Stellglied des Steuerorgans in ihre ausgekuppelte Schwenklage in eine Haltenut eines fixen Balkens schaltbar. Diese Ausführung hat den Vorteil, dass die ganze Steuerung mit nur einem Stellglied erfolgen kann, da ja das Kupplungsglied pro halber Umdrehung der Exzenterscheibe auf der Hauptachse jeweils eine ganze Umdrehung ausführt.

Hierbei kann vorteilhaft als Steuerorgan pro Schaft ein Aktivmagnet, ein Drehmotor, Pneumatik- oder Hydraulikzylinder im Balken so angeordnet werden, dass er zu Steuerorganen benachbarter Schäfte in Umfangsrichtung der Antriebswelle bzw. in Längsrichtung des Balkens sternförmig versetzt ist, so dass jedes Steuerorgan in Längsrichtung des Balkens eine Ausdehnung aufweisen kann, die die Breite der Schaftteilung übertrifft.

Eine andere vorteilhafte Ausführung kann darin bestehen, dass die Doppelklinke direkt auf der Exzenterscheibe um einen Bolzen schwenkbar gelagert ist und durch das Stellglied des Steuerorgans aus einem Eingriff in einer Nut der Antriebs welle oder eines mit dieser drehverbundenen Teils, in welchem die Doppelklinke durch eine Feder gehalten ist, entgegen der Wirkung dieser Feder in Rastelemente des Pleuels schaltbar ist.

Auch hier kann zweckmässig als Stellantrieb ein elektromechanischer, pneumatischer oder hydraulischer Stellantrieb vorgesehen sein, durch welchen direkt einem unmittelbar auf die Doppelklinke wirkenden Stellglied ein Betätigungshub erteilt wird. Auch hier können die Steuerorgane benachbarter Schäfte in Umfangsrichtung sternförmig versetzt sein, sodass dadurch grössere, und somit auch stärkere Steuerorgane möglich sind und damit die erforderliche Kraft leicht ohne zusätzliche Kraftverstärker aufgebracht werden kann.

Wenn gemäss einer vorteilhaften Weiterbildung ausserdem die der Antriebswelle zugewandte Fläche des Balkens eine Gleitfläche für die Doppelklinke aufweist und die Längsnut in der Antriebswelle bzw. in dem mit ihr drehverbundenen Teil so ausgebildet ist, dass ein Schalten der Doppelklinke durch das Stellglied oder durch die Feder nur in Offenfachstellung der Schäfte möglich ist, und somit die Schaltenergie ca. 30° vor Erreichen der Offenfachstellung im Steuerorgan aufgebaut bzw. gespeichert wird, muss die Klinkenbetätigung durch das Steuerorgan nicht mehr absolut dann erfolgen (was sehr schwierig ist) wenn die Nut dem Klinkennocken gegenüberliegt, sondern kann auch etwas vorher erfolgen. Daraus ergibt sich eine grosse Erleichterung für die Steuerung, da dann nicht mehr so genau auf die Drehstellung der Antriebswelle geachtet werden muss.

Bei einer weiteren Ausführungsform erfolgt die Uebertragung des Vor- und Rückhubs des Stellglieds auf die auf der Exzenterscheibe schwenkbar gelagerte Doppelklinke vorteilhaft über zwei symmetrisch schwingende Hebel.

Zusätzliche Vorteile der Erfindung ergeben sich aus den weiteren abhängigen Ansprüchen.

Die Erfindung wird im folgenden anhand von Ausführungsbeispielen mit Bezug auf die beiliegenden Zeichnungen näher erläutert. Es zeigt:
- Fig.1: schematisch in einem Vertikalschnitt eine Steuervorrichtung mit Kupplungsvorrichtung einer Schaftmaschine in eine Ausführung mit einem Uebersetzungszahnrad;
- Fig.2: schematisch eine Aufsicht auf die in Fig. 1 gezeigten Teile;
- Fig. 3: in einem Schnitt entsprechend demjenigen der Fig. 1 wiederum schematisch die eigentliche Rotationseinheit bei von der Längsnut ausgekuppelter und in einer Haltenut gehaltener Lage;
- Fig. 4: in einer Darstellung entsprechend derjenigen der Fig. 3 die Teile mit gekuppelter Doppelklinke nach einer Drehung der Antriebswelle um 180°;
- Fig. 5: in einer Darstellung etwa entsprechend der Fig. 3 und 4 eine zweite Ausführungsform der Erfindung in der Hochfachstellung mit direkt auf die Exzentereinheit wirkender eingekuppelter Doppelklinke;
- Fig. 6: die Ausführung nach Fig.5 in einer Zwischenlage unterwegs zwischen Hochfach und Tieffach;
- Fig. 7: die Ausführung nach Fig.5 im Tieffach mit ausgekuppelter Doppelklinke;
- Fig. 8: in einer Darstellung entsprechend derjenigen der Figur 5 eine weitere Ausführungsform der erfindungsgemässen Schaftmaschine mit zwei symmetrisch schwingenden Hebeln, und
- Fig. 9: eine Variante des Ausführungsbeispiels nach den Figuren 1 bis 4.

Jeder Schaft einer Webmaschine ist in bekannter und deshalb hier nicht näher dargestellter Weise über ein Gestänge mit einem Pleuel 8 bzw. 38 verbunden. Keilkupplungen übertragen steuer- und mustergemäss die Rotationsbewegung der Antriebswelle 1 bzw. 36 auf die Exzenterscheibe 7 bzw. 37 und über diese auf den Pleuel, dessen Bewegungen über das erwähnte Gestänge, hier dargestellt durch eine Schwinge 9 bzw. 43, die Schaftbewegungen des zugeordneten Schaftes zwischen Hochfach und Tieffach erzeugen.

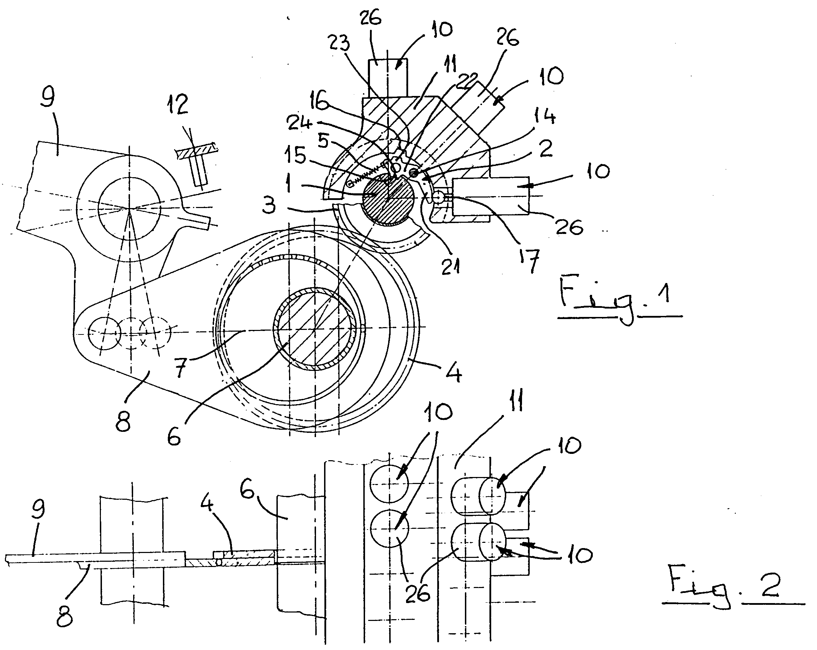

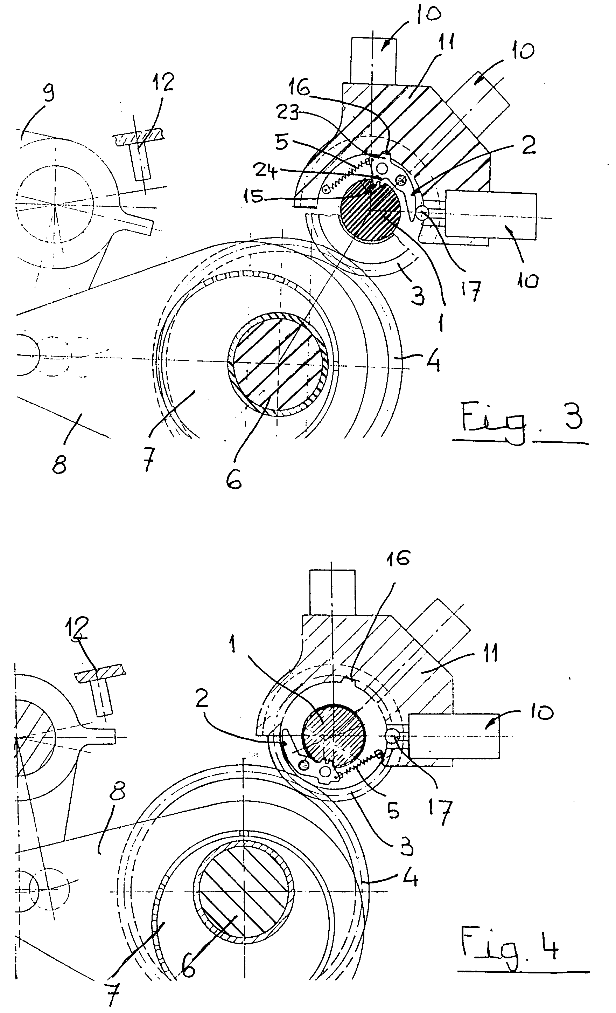

Im Ausführungsbeispiel der Figuren 1 bis 4 ist die Exzenterscheibe 7 en einem Zahnrad 4 befestigt, wobei das Zahnrad 4 und die Exzenterscheibe 7 auf einer Hauptachse 6 angeordnet sind .Mit dem Zahnrad 4 kämmt ständig 4 ein weiteres Zahnrad 3, welches auf einer diskontinuierlich rotierenden Antriebswelle 1 gelagert ist. Die Zahnräder 4 und 3 sind im Verhältnis 2:1 übersetzt, sodass einer vollen Umdrehung des Zahnrades 3 eine halbe Umdrehung des Zahnrades 4 entspricht. Durch eine volle Umdrehung des Zahnrades 3 wird der Pleuel 8 aus seiner einen Endstellung in seine andere Endstellung, entsprechend der Hochfach- bzw. Tieffachlage bewegt. Das Zahnrad 3 und die Antriebswelle 1 werden nach Bedarf des Programms für die Fachbewegung über ein von aussen gesteuertes Kupplungsglied kraftschlüssig miteinander verbunden.

Ausgehend von diesem an sich bekannten Grundaufbau aus, ist hier jedoch das Kupplungsglied durch eine Doppelklinke 2 mit den Klinkenarmen 21 und 22 gebildet ist welche, damit Fliehkräfte kein Drehmoment an ihr erzeugen können, zweckmässig um ihren Schwerpunkt an einem Bolzen 14 frei schwenkbar am Zahnrad 3 oder an einem mit diesem drehverbundenen Mitnehmer gelagert ist. Der Klinkenarm 22 trägt einen gegen die Antriebswelle 1 gerichteten Nocken 24, beim Beispiel der Figur 1 ist es ein Zwillingsnocken, der durch eine Zugfeder 5 im Eingriff in einer entsprechend geformten Nut 15 im Umfang der Antriebswelle 1 gehalten ist. In dieser Stellung wird das Drehmoment an der Antriebswelle 1 über die Doppelklinke 2 auf das Zahnrad 3 übertragen und von diesem über das Zahnrad 4, die Exzenterscheibe 7, den Pleuel 8 und die Schwinge 9 zur Schaftbewegung geleitet.

Die Bewegung der Doppelklinke 2 im Sinne eines Auskuppelns des Nockens 24 aus der Nut 15 der Antriebswelle 1 entgegen der Wirkung der Feder 5 erfolgt, bei stillstehender Antriebswelle 1, unmittelbar direkt kraftschlüssig durch ein radial auf den anderen Klinkenarm 21 der Doppelklinke 2 einwirkendes Stellglied 17 eines Steuerorgans 10. Im Beispiel der Figuren 1 bis 4 ist dieses Stellglied 17 durch den Kern eines Hubmagneten 26 gebildet, der in einem stillstehenden Balken 11 befestigt ist. Zum Auskuppeln der Doppelklinke 2 von der Antriebswelle 1 wird, während des Stillstands des Zahnrads 3, ein mechanischer Impuls in Form eines Hubs des Stellglieds 17 in radialer Richtung auf den Klinkenarm 21 erzeugt, der dazu führt, dass der Nocken 24 der Doppelklinke 2 aus der Nut 15 ausrastet, sodass beim Weiterdrehen der Antriebswelle 1 die Zahnräder 3 und 4, der Pleuel 8 und damit auch die Schwinge 9 stehen bleiben. Ist das Stellglied 17 bzw. sein Steuerorgan in dieser Stellung arretiert bleibt die Doppelklinke 2 ausgekuppelt bis bei einem der nächsten Stillstände des Zahnrads 3 das Steuerorgan 10 einen in entgegengesetzter Richtung wirkenden Steuerimpuls erzeugt, sodass die Doppelklinke 2 unter der Wirkung der Feder 5 wieder in eine Nut 15 der Antriebswelle 1 einkuppeln kann. Die Anordnung ist so getroffen, dass die durch das Stellglied 17 ausgekuppelte Doppelklinke 2 mit einem Nocken 23 in eine Haltenut 16 im Balken 11 eingreift und dabei der Balken 11 den Schaft in Offenfachstellung mit dem Gehäuse formschlüssig verbindet bzw. arretiert.

Die Steuerorgane 10 für die einzelnen Schäfte, hier die Stellmagnete 26, können in Reihen im Balken 11 angeordnet werden, sie können aber auch, wie in der Fig. 2 angedeutet, in Umfangsrichtung der Antriebswelle 1 bzw. in Längsrichtung des Balkens 11 versetzt, z.B. sternförmig versetzt angeordnet sein, sodass jedes Steuerorgan in Längsrichtung des Balkens 11 eine Ausdehnung aufweisen kann, welche die Schaftteilung übertrifft. Das erlaubt in vorteilhafter Weise die Teilung von z.B. 12 mm auf beispielsweise 36 mm zu erhöhen. Dies ist auch dann möglich, wenn als Steuerorgane statt des dargestellten Hubmagneten 26 Pneumatik- oder Hydraulikzylinder oder auch Drehmotoren mit entsprechenden Stellgliedern eingesetzt werden.

Zweckmässig weist die der Antriebswelle 1 zugewandte Fläche des Balkens 11 eine Gleitfläche für die Doppelklinke 2 auf und die Antriebswelle 1 ist so ausgebildet, dass ein Schalten der Klinke 2 durch das stellglied 17 oder die Feder 5 nur in Offenfachstellung der Schäfte möglich ist. Dadurch wird die Schaltenergie ca 30° vor Erreichen der Offenfachstellung im Steuerorgan 10 aufgebaut bzw. gespeichert. Mit Vorteil ist ausserdem die Doppelklinke 2 so gelagert und ausgebildet, dass das aus der Drehbewegung der Antriebswelle 1 auf die Klinke 2 wirkende Drehmoment das Auskuppeln während der Schaftbewegung verhindert
Mit 12 ist hier, wie auch bei den später erläuterten Ausführungsbeispielen, ein Sensor, vorteilhaft ein induktiver Sensor bezeichnet, der jederzeit die Stellung der Schwinge abtastet und das ermittelte Positionssignal einem hier nicht näher beschriebenen Programmiersystem weitergibt. Damit kann jederzeit das richtige Steuersignal ermittelt und allfällige Bindungsfehler erkannt werden.

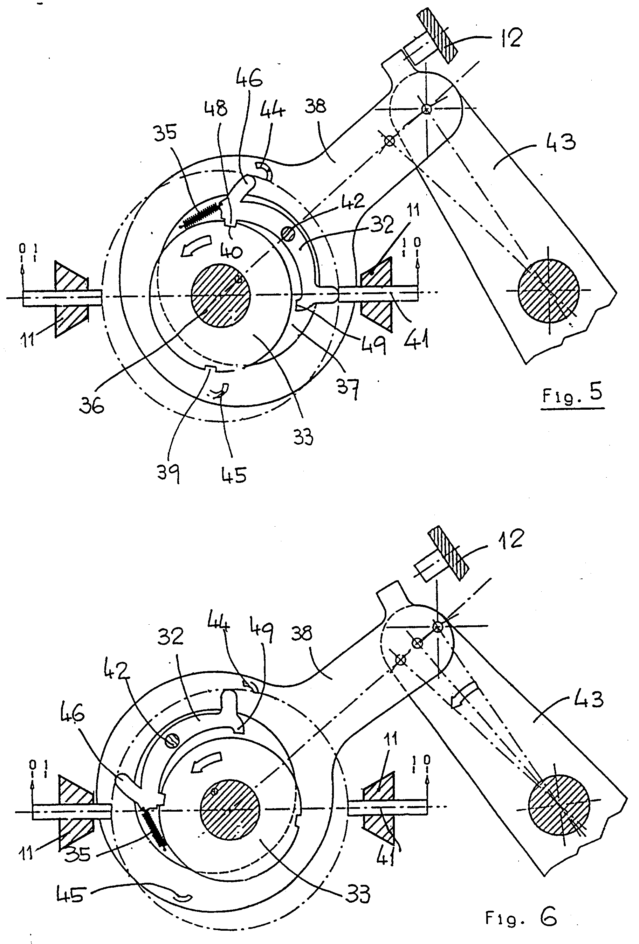

Vom Ausführungsbeispiel nach den Figuren 1 bis 4 unterscheidet sich dasjenige nach den Figuren 5 bis 7 dadurch, dass hier die Doppelklinke 32 an einem Bolzen 42 direkt auf der Exzenterscheibe 37 schwenkbar gelagert ist, und dass es sich bei der Doppelklinke 32 um eine doppeltwirkende Doppelklinke mit beiderends ihrer Klinkenarme gegen die Antriebswelle 36 gerichteten Mitnehmer- bzw. Anschlagnocken 48 bzw. 49 handelt. Auf der Antriebswelle 36 sitzt, wiederum für jeden Schaft, eine Mitnehmerscheibe 33, welche zwei um 180° versetzt angeordnete Nuten 39, 40 aufweist. Die Antriebswelle 36 führt eine dem Zweck angepasste ungleichförmige Drehbewegung aus, mit einem Stillstand, welcher sich mit einem Schrittwinkel von 180° periodisch wiederholt. Die Doppelklinke 32 kann während dem Stillstand der Mitnehmerscheibe 33 unter der Wirkung der Feder 35 mit ihrem Mitnehmernocken 48 in eine der beiden Nuten 39 oder 40 einkuppeln, bei der Darstellung der Figur 5 beispielsweise mit dem Mitnehmernocken 48 in die Nut 40. Wie beim ersten Beispiel ist auch hier wieder der Pleuel 38 auf der Exzenterscheibe 37 gelagert und anderseits mit der Schwinge 43 verbunden. Der Pleuel 38 ist mit zwei Rastelementen 44 und 45 versehen, in welche ein an der Doppelklinke 32 gebildeter Rastnocken 46 eingreift, wenn die Doppelkllnke 32 ausgekuppelt ist, wodurch eine formschlüssige Verbindung zwischen dem Pleuel 38 und der Exzenterscheibe 37 hergestellt wird. Diese ist notwendig, damit die von der Hauptwelle 36 entkoppelte Schwinge 43 in der Hoch- oder Tieffachlage fixiert bleibt.

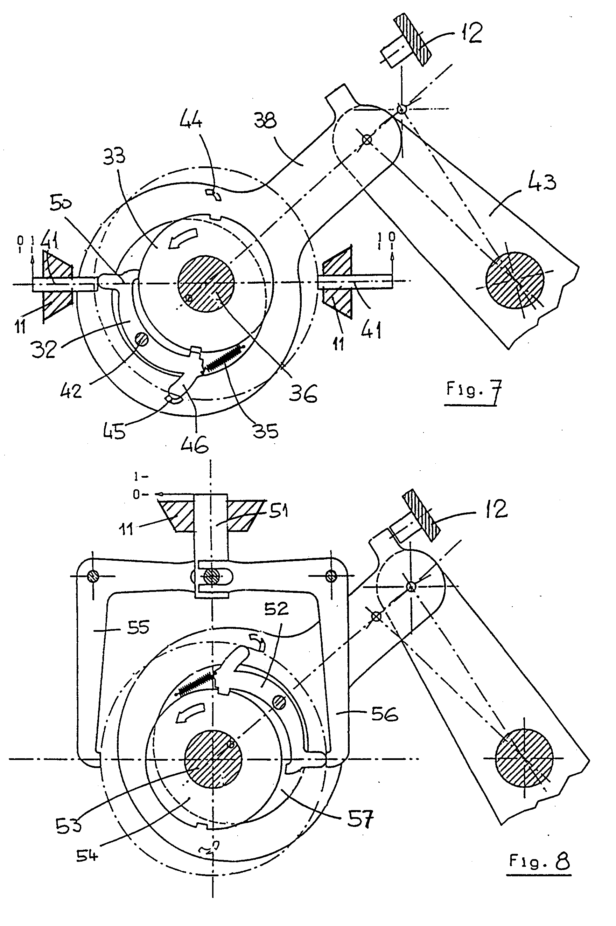

Die Figur 6 zeigt die Anordnung gemäss Figur 5 in der Mittelfachstellung.

Wie die Figur 7 erkennen lässt erzeugt zum Auskuppeln der Doppelklinke 32 ein hier nicht näher dargestelltes Steuerorgan, beispielsweise wie beim ersten Beispiel ein Hubmagnet, wahrend des Stillstands der Mitnehmerscheibe 33 einen Hub des Stellglieds 41 in radialer Richtung auf den benachbarten Klinkenarm, hier der Klinkenarm 50 der Doppelklinke 32, welcher dazu führt, dass die Doppelklinke 32 entgegen der Wirkung der Feder 35 im auskuppelnden Sinne auf den Antriebswelle 36 mit dem Anschlagnocken 49 gleitet, sodass beim Weiterdrehen der Antriebswelle 36 der Pleuel 38 und damit auch die Schwinge 43 stehen bleiben. In dieser durch das Stellglied 41 des Steuerorgans erzeugten Gleitposition der Doppelklinke 32 rastet diese ausserdem mit ihrem äusseren Nocken 46 in das Rastelement 45 des Pleuels 38 und arretiert diesen. Die Verbindung bleibt ausgekuppelt bis bei einem der nächsten Stillstände der Antriebswelle 36 bzw. der Mitnehmerscheibe 33 das Steuerorgan einen Steuerhub in entgegengesetzter Richtung erzeugt und dadurch, unterstützt durch die Feder 35, die Doppelklinke 32 wieder einkuppeln kann.

Das in der Figur 8 dargestellte Ausführungsbeispiel eliminiert eine Schwäche der Ausführung nach den Figuren 5 bis 7, die darin liegt, dass diese zwei Stellantriebe erfordert. Beim Beispiel der Fig. 8 ist wiederum, wie beim ersten Ausführungsbeispiel, nur ein einziges Steuerorgan, das wiederum ein Hubmagnet sein kann erforderlich, der auf ein einziges Stellglied 51 wirkt. Die Anordnung der Doppelklinke 52 an der Exzenterscheibe 57 und die Rastnocken und Rastnuten an der Doppelklinke 52 sowie im mit der Antriebswelle 53 drehverbundenen Mitnehmer 54 entsprechen dem zweiten Ausführungsbeispiel. Die Uebertragung des Vor- und Rückhubs des Stellglieds 51 erfolgt hier mit Hilfe von zwei symmetrisch schwingenden Hebeln 55,56 zu den beiden Schaltstellen der Doppelklinke 52 zu deren Verstellung aus der kuppelnden Lage in die entkuppelte Lage und aus dieser wieder zurück.

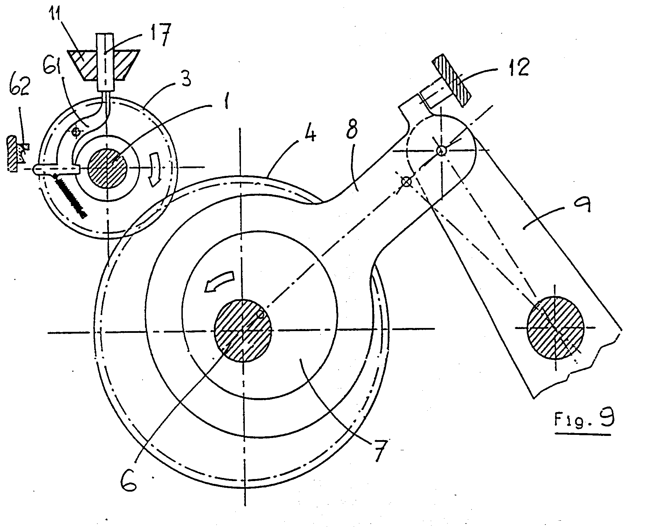

Die Figur 9 schliesslich zeigt eine Variante der Ausführungsform nach den Figuren 1 bis 4, bei welcher das Einrasten der durch das Stellglied des Steuerorgans in die ausgekuppelte Stellung verschwenkten Doppelklinke 61 in eine Rastnut 62 erfolgt, um den Pleuel in der Hoch- oder Tieffachstellung zu fixieren. Die Wirkungsweise und Funktion dieser Variante entspricht im übrigen derjenigen des Ausführungsbeispiels nach den Figuren 1 bis 4 und es sind deshalb auch für entsprechende Teile die gleichen Bezugszeichen wie in diesem ersten Beispiel verwendet.

## Patentansprüche

1. Schaftmaschine mit Exzentereinheiten für die Schaftbewegung, wobei jede Exzentereinheit aus einer auf einer Antriebswelle drehbar gelagerten Exzenterscheibe besteht, auf deren Umfang ein Pleuel gelagert ist, welcher eine mit dem zugeordneten Schaft bewegungsverbundene Schwinge antreibt, und mit einem vom aussen durch ein Steuerorgan gesteuerten Kupplungsglied, welches mustergemäss die Exzentereinheit mit dem Antrieb ein- und auskuppelt, dadurch gekennzeichnet, dass das Kupplungsglied durch eine um einen Bolzen (14;42) schwenkbar gelagerte Doppelklinke (2;32;52;61) mit Mitnehmernocken (24;48) gebildet ist, welche durch eine Feder (5;35) in der einen, eingekuppelten Lage gehalten ist und welche, je nach Mustersteuerung, während dem Stillstand der Schaftmaschine, durch ein unmittelbar direkt kraft- oder formschlüssig auf sie einwirkendes Stellglied (17;41;51) des Steuerorgans (10) entgegen der Wirkung der Feder (5;35) auskuppelbar ist.

2. Schaftmaschine nach Anspruch 1, bei der jede Exzentereinheit von einer diskontinuierlich rotierenden Antriebswelle über ein der Exzentereinheit vorgelagertes und durch das Kupplungsglied mit dieser kuppelbares, frei drehbar auf der Antriebswelle (1) gelagertes Zahnrad (3) über eine Synchronübersetzung 1:2 angetrieben ist, dadurch gekennzeichnet, dass die Doppelklinke (2) in ihrer kuppelnden Schwenklage durch ihre Feder (5) rastend in einer Längsnut (15) der Antriebswelle (1) gehalten ist oder vom direkt auf ihren einen Klinkenarm wirkenden Stellglied (17) des Steuerorgans (10) in ihre ausgekuppelte Schwenklage in eine Haltenut (16) eines fixen Balkens (11) schaltbar ist.(Fig. 1 bis 4)

3. Schaftmaschine nach Anspruch 1, dadurch gekennzeichnet, dass die Doppelklinke (32) direkt auf der Exzenterscheibe (37) um einen Bolzen (42) schwenkbar gelagert ist und durch das Stellglied (41) des Steuerorgans (10) aus einem Eingriff in einer Nut (40) der Antriebswelle (36) oder eines mit dieser drehverbundenen Teils (33), in welchem die Doppelklinke (32) durch eine Feder (35) gehalten ist, entgegen der Wirkung dieser Feder (35) in Rastelemente (44,45) des Pleuels (38) schaltbar ist. (Fig. 5 bis 7)

4. Schaftmaschine nach einem der Ansprüche 1 bis 3, dadurch gekennzeichnet, dass ein elektromechanischer, pneumatischer oder hydraulischer Stellantrieb vorgesehen ist, durch welchen direkt einem unmittelbar auf die Doppelklinke (2;32;52;61) wirkenden Stellglied (17;41) ein Betätigungshub erteilt wird.

5. Schaftmaschine nach einem der Ansprüche 1 bis 4, dadurch gekennzeichnet, dass als Steuerorgan (10) pro Schaft ein Aktivmagnet, Pneumatik- oder Hydraulikzylinder oder ein Drehmotor im Balken (11) so angeordnet ist, dass er zu Steuerorganen (10) benachbarter Schäfte in Umfangsrichtung der Antriebswelle (1;36) sternförmig versetzt ist, wodurch jedes Steuerorgan (10) in Längsrichtung eine Ausdehnung aufweisen kann, die die Breite der Schaftteilung übertrifft.

6. Schaftmaschine nach einem der Ansprüche 1 bis 5, dadurch gekennzeichnet, dass die der Antriebswelle (1;36) zugewandte Fläche des Balkens (11) eine Gleitfläche für die Doppelklinke (2;32) aufweist und die Antriebswelle (1) mit der Längsnut (15) bzw. der mit der Antriebswelle (36) drehverbundene Teil (33) mit der Längsnut (40) so ausgebildet sind, dass ein Schalten der Doppelklinke (2;32) durch das Stellglied (17;41) oder die Feder (5;35) nur in Offenfachstellung der Schäfte möglich ist, und sich somit die Schaltenergie vor Erreichen der Offenfachstellung im Steuerorgan (10) aufbaut bzw. speichert.

7. Schaftmaschine nach einem der Ansprüche 1 bis 6, dadurch gekennzeichnet, dass die Doppelklinke (2;32) auf einem Bolzen (14;42) so gelagert ist, dass die aus der Dreh bewegung der Antriebswelle auf die Klinke wirkenden Belastungen das Auskuppeln während der Schaftbewegung verhindern.

8. Schaftmaschine nach einem der Ansprüche 1 bis 7, dadurch gekennzeichnet, dass die in ihrer ausgekuppelten Lage eingerastete Doppelklinke den Schaft in Offenfachstellung arretiert.

9. Schaftmaschine nach Anspruch 8, dadurch gekennzeichnet, dass der Balken (11) über die in die Haltenut (16) eingreifende Doppelklinke (2) den Schaft in Offenfachstellung mit dem Gehäuse formschlüssig verbindet bzw. arretiert.

10. Schaftmaschine nach einem der Ansprüche 1 bis 9, dadurch gekennzeichnet, dass die auf der Exzenterscheibe (37) schwenkbar gelagerte Doppelklinke (32) einen Mitnehmernocken (48) zum Einkuppeln in entsprechende paarweise Nuten (39,40) in der Antriebswelle (36) oder in einem mit dieser drehverbundenen Teil (33) aufweist, und dass die Doppelklinke (32) weiter mit einem Rastnocken (46) versehen ist, welcher zum Einrasten der ausgekuppelten Doppelklinke (32) in entsprechende Rastelemente (44,45) im Pleuel (38) bestimmt ist, um die Teile in der ausgekuppelten Lage zu fixieren.

11. Schaftmaschine nach einem der Ansprüche 1 bis 10, dadurch gekennzeichnet, dass die Uebertragung des Vor- und Rückhubs des Stellglieds (51) auf die auf der Exzenterscheibe (57) schwenkbar gelagerte Doppelklinke (52) über zwei symmetrisch schwingende Hebel (55,56) erfolgt.

12. Schaftmaschine nach einem der Ansprüche 1 bis 11, dadurch gekennzeichnet, dass ein induktiver Sensor (12) die Stellung der Schwinge abtastet und das ermittelte Positionssignal einer Programmiereinrichtung zuleitet.

13. Schaftmaschine nach einem der Ansprüche 1 bis 12, dadurch gekennzeichnet, dass die schwenkbar gelagerte Doppelklinke (2, 32, 52) mit einem oder mehreren Nocken (24, 48) in die Antriebswelle (1) oder in eine mit der Antriebswelle (36) drehverbundene Mitnehmerscheibe (33) einkuppelt und damit das übertragbare Drehmoment erhöht.
